# EUROPÄISCHE PATENTSCHRIFT

(11) **EP 1 820 389 B1**
(45) Veröffentlichungstag und Bekanntmachung des Hinweises auf die Patenterteilung: **29.04.2009**
(21) Anmeldenummer: 06126472.7
(22) Anmeldetag: 19.12.2006
(51) Int. Cl.: A01F 12/30

(54) **Mähdrescher mit mehrstufigem Trennbereich**
Combine-harvester with multi-stage separating zone
Moissonneuse-batteuse avec zone de séparation multi-étagée

(30) Priorität: 17.02.2006 DE 102006007809
(43) Veröffentlichungstag der Anmeldung: 22.08.2007
(73) Patentinhaber: CLAAS Selbstfahrende Erntemaschinen GmbH, 33428 Harsewinkel (DE)
(72) Erfinder: Aerdker, Bernhard, 48231, Warendorf (DE); Fögeling, Walter, 33442, Herzebrock-Clarholz (DE); Bühlmeier, Robert, 33442, Herzebrock-Clarholz (DE)

(56) Entgegenhaltungen:
- DE-A1- 2 254 461
- US-A- 546 372

## Beschreibung

Die Erfindung betrifft einen Mähdrescher mit einem mehrstufigen Trennbereich nach dem Oberbegriff des Anspruchs 1,

Hordenschüttler mit einem mehrstufig ausgeführten Trennbereich sind unter anderem aus der DE 22 54 461 bekannt geworden. Ein konventioneller, sogenannter Tangentialmähdrescher verfügt über ein Ein- oder Mehrtrommeldreschwerk welchem in seinem rückwärtigen Bereich oben- oder untenseitig eine aus einer Gutumlenkwalze bestehende Gutumlenkeinrichtung zugeordnet ist. Die Gutumlenkeinrichtung selbst ist im Übergabebereich zwischen den Dreschorganen und zwei in vertikaler Richtung übereinander angeordneten, den Trennbereich bildenden Hordenschüttlern positioniert.

In einer ersten Ausführungsform wird der aus dem Dreschbereich austretende Gutstrom von einer untenseitig dem Dreschbereich zugeordneten Gutumlenkwalze erfasst und über einen Zinkenrechen einer ersten und einer zweiten Trennebene zugeführt Die Zinken sind dabei wechselweise entweder auf den oberen oder den unteren Hordenschüttler ausgerichtet Eine solche Ausführung hat insbesondere den Nachteil, dass die stark vernetzte Gutmatte mittels der Gutumlenkwalze an den Zinken in eine Vielzahl von Teilströmen aufgeteilt werden und teilweise durch die Zinken der oberen Zinkenebene hindurchgepresst werden muss, Dabei erfordert die Aufteilung des Erntegutstromes in diese Vielzahl von Erntegufteilströmen einen erheblichen Energieeinsatz. Zudem wird wegen der vernetzten Struktur der Erntegutmatte nur ein unbefriedigendes Trennergebnis des Erntegutstromes in die erforderlichen Ernteguheilströme erzielt, was letztlich eine ungleichmäßige Beschickung der verschiedenen Trennebenen zur Folge hat. Die Anordnung der Gutumlenkeinrichtung unterhalb der Dreschorgane hat zudem den Nachteil, dass die Dreschorgane eine in vertikaler Richtung hohe Position einnehmen müssen, sodass zunächst eine erhebliche Förderarbeit aufgewendet werden muss, um den geernteten Gutstrom in die hohe Position der Dreschorgane zu transponieren.

In der weiteren AusfÜhrungsform soll dieser Nachteil dadurch behoben werden, dass den Dreschorganen in an sich bekannter Weise eine Gutumlenktrommel zugeordnet ist, die den gesamten aus dem Dreschbereich austretenden Gutstrang einem einzigen Hordenschüttler zuführt. Dieser Hordenschüttrer ist jedoch in seinem gutannahmeseitigen Bereich in offener Bauweise ausgeführt, sodass zumindest ein Teil des auf den oberen Hordenschüttler gelangenden Erntegutstromes durch diesen hindurchtritt und auf den unteren Hordenschüttler gelangt Wegen der oszillierenden Bewegung der Hordenschüttler hat eine solche Ausführung vor allem den Nachteil, dass das Erntegut nur sporadisch durch den Freiraum der bewegten Horden des oberen Hordenschüttlers gelangt, sodass auch hier eine kontinuierliche und gleichmäßige Aufteilung des Erntegutstromes auf die verschiedenen Trennebenen nicht gegeben ist.

Der vorliegenden Erfindung liegt daher die Aufgabe zugrunde, die im Stand der Technik beschriebenen Nachteile zu vermeiden und insbesondere eine Vorrichtung zu schaffen, die eine effiziente und nahezu gleichmäßige Aufteilung eines Erntegutstromes auf eine Vielzahl von Trennebenen ermöglicht.

Indem der Erntegutstrom vom Dreschbereich in den Trennbereich entlang eines Gutleitelementes geführt wird und dem Gutleitelement im Bereich der jeweiligen Trennebene Gutdurchtrittsbereiche zugeordnet sind, wird sichergestellt, dass eine effiziente und nahezu gleichmäßige Aufteilung eines Erntegutstromes auf eine Vielzahl von Trennebenen möglich wird.

Eine konstruktiv besonders einfach aufgebaute und eine effiziente Gutförderung ermöglichende Ausgestaltung der Erfindung wird erreicht, wenn das Gutleitelement die Förderstrecke des Erntegutstromes von der die Dreschorgane wenigstens teilweise ummantelnden Abscheideebene bis in den Bereich der am weitesten von dem Dreschbereich entfernten Trennebene überbrückt.

Auf Konstruktiv einfache Weise wird der Gutdurchtrittsbereich durch eine Gutdurchtrittsöffnung gebildet und wobei sich die Gutdurchtrittsöffnung über einen Teilbereich der Arbeitsbreite des dem jeweiligen Gutdurchtrittsbereich zugeordneten Gutförderorgans erstreckt.

Damit die einzelnen Trennebenen nahezu die gleiche Abscheideeffizienz aufweisen, wird in einer vorteilhaften Ausgestaltung der Erfindung die Breite der Gutdurchtrittsöffnung so gewählt, dass der Erntegutstrom in nahezu gleiche Anteile von Erntegutteilströmen für die einzelnen Trennebenen aufteilbar ist. Eine besonders flexible Anpassung an verschiedene Ernteguteigenschaften wird in diesem Zusammenhang dann erreicht, wenn die Breite der Gutdurchtriflsöfinung einstellbar ist.

Damit die Aufgliederung des Erntegutstromes in Emteguttei!ströme mit geringem Energieaufwand durchführbar ist und zudem ein kontinuierlicher, störungsarmer Gutfluss gewährleistet wird, ist in einer vorteilhaften Ausgestaltung der Erfindung vorgesehen, dass die eine oder mehreren Gutdurchtrittsöffnungen in ihrem den Gutförderorganen zugewandten Bereich und in Bewegungsrichtung des Erntegutstromes Begrenzungsstege aufweisen. Dieser Effekt wird dadurch noch erhöht, wenn die Begrenzungsstege als Schneidelemente ausgebildet sind.

Damit der jeweilige Erntegutteilstrom möglichst homogen über die Arbeitsbreite der jeweiligen Trennebene verteilbar ist, sind in einer vorteilhaften Ausgestaltung der Gutdurchtrittsöffnung in Bewegungsrichtung des durchtretenden Erntegutteiistromes Verteilerklappen zur Querverteilung des Erntegutteilstromes in der jeweiligen Trennebene zugeordnet, wobei die einstellbare Anordnung der Verteilerklappen eine flexible Anpassung der Verteilgüte in Abhängigkeit von unterschiedlichen Ernteguteigenschaften zulässt

Da in der Regel die von den Dreschorganen dem Erntegutstrom aufgeprägte kinetische Energie hoch ist, können material- und gewichtssparend die Gutförderorgane als Gutfördertrommeln ausgebildet sein, wobei die Breite des Trommelmantels an die Breite der jeweiligen Gutdurchtrittsöffnung angepasst ist. Wegen der dem Erntegutstrom aufgeprägten kinetischen Energie kann in einer vorteilhaften Ausgestaltung der Erfindung auch vorgesehen sein, dass der Erntegutstrom und/oder die Erntegutteilströme in den nicht von den Gutdurchtrittsöffnungen durchsetzten Bereichen ungehindert zwischen den Gutförderorganen und dem Gutleitelement durchtreten können.

Eine sichere Gutumlenkung im Endbereich des Gutleitelementes wird dann auf einfache Weise sichergestellt, wenn dem Gutleitelement in seinem Endbereich ein Gutförderorgan in der Weise zugeordnet ist, dass das Gutförderorgan in diesem Bereich den oder die EmtegutteiMröme in den Bereich der zugeordneten Trennebene umlenkt. Eine besonders einfache Umsetzung dieses Gutumlenkungsprozesses ergibt sich dann, wenn in Bewegungsrichtung der Erntegutteilströme dem Gutförderorgan zumindest eine Verteilerhaube mit einstellbaren Leitschienen zur Querverteilung der Erntegutteilströme zugeordnet ist.

Eine besonders kompakte und einen niedrigen Energiebedarf verursachende Ausgestaltung der Erfindung wird dadurch geschaffen, dass das Gutleitelement dem Dreschbereich in einer in vertikaler Richtung geneigten Position zugeordnet ist und den Erntegutstrom zwischen zwei in vertikaler Richtung aufeinanderfolgend angeordneten Gutfördertrommeln und zwei in vertikaler Richtung aufeinander folgend angeordneten Trennebenen führt.

Ein besonders flexibler Einsatz der Erfindung ergibt sich dann. wenn die Trennebenen als Hordenschüttler oder Trennrotoren ausgebildet sind.

Damit die reibungsbedingte Abnahme der Gutfördergeschwindigkeit im rückwärtigen Bereich der Dreschorgane ausgeglichen und damit ein optimaler Gutfluss sichergestellt wird ist in einer weiteren vorteilhaften Ausgestaltung der Erfindung vorgesehen, dass die Drehzahl der Gutfördertrommeln in Richtung des Erntegutflusses zunimmt und bei Anordnung von zwei Gutfördertrommeln die in Gutflussrichtung nachgeordnete Gutfördertrommel eine etwa 15% höhere Drehzahl als die ihr vorgeordnete Gutfördertrommel aufweist.

Zur Intensivierung der Kornabscheidung kann ferner vorgesehen sein, dass die verschlossenen Abschnitte des Gutleitelementes wenigstens teilweise von Korndurchtritlsöffnungen durchsetzt sind,

Um eine bauraumsparende Ausführung eines Mähdrescher mit mehreren Trennebenen zu erhalten, ist in einer vorteilhaften Ausgestaltung der Erfindung vorgesehen, dass die in den nachgeordneten Trennebenen abgeschiedenen Körnerströme jeweils im Bereich der verschlossenen Abschnitte des Gutleitelementes durch die vorgeordnete Trennebene gefördert und nachfolgenden Arbeitsorganen zugeführt werden. In diesem Zusammenhang hat es sich als Vorteil erwiesen, wenn jedem Hordenschüttler ein Rücklaufboden zugeordnet ist und der Rücklaufboden der jeweils nachgeordneten Trennebene im Bereich der ihm vorgeordneten Trennebene entsprechend den verschlossenen Abschnitten des Gutleitelementes in dieser Trennebene geteilt ausgeführt ist.

In vorteilhafter Weiterbildung der Erfindung kann die Kornabscheideeffektivität eines Mähdreschers mit mehreren Trennebenen auch dadurch noch erhöht werden, wenn jeweils dem Rücklaufboden eines Hordenschüttlers einer nachgeordneten Trennebene Gutauflockerungselemente für die Emtegutteilströme der vorgeordneten Trennebene untenseitig zugeordnet sind.

Zudem wird eine montagefreundliche Ausführung des erfindungsgemäßen Gutleitelementes erreicht, wenn das Gutleitelement mehrteilig ausgebildet ist.

Eine erhebliche Reduzierung der von den Hordenschüttlerbewegungen verursachten Vibrationen des Mähdreschers an sich kann in vorteilhafter Ausgestaltung der Erfindung dadurch erreicht werden, dass die Bewegung der die Trennebenen bildenden Hordenschüttler so aufeinander abgestimmt ist, dass sich eine zumindest teilweise Massenkräftekompeisation einstellt.

Damit in der Ernteprozesskette nachfolgende Bearbeitungen, wie insbesondere das Verpressen des aus dem Mähdrescher geförderten Strohs handhabbare Ballengrößen ermöglicht, wird ist in einer weiteren vorteilhaften Ausgestaltung der Erfindung vorgesehen, dass die Erntegutteilströme der einzelnen Trennebenen einer gesonderten Verwertung zugeführt werden.

Weitere vorteilhafte Ausgestaltungen sind Gegenstand weiterer Unteransprüche und werden nachfolgend anhand von Zeichnungen näher erläutert.

### Es zeigen:

- Figur 1: einen Mähdrescher in Seitenansicht mit erfindungsgemäßem Gutleitelement
- Figur 2: eine Detailansicht des erfindungsgemäßen Gutleitelementes
- Figur 3: eine weitere Detailansicht des erfindungsgemäßen Gutleitelementes

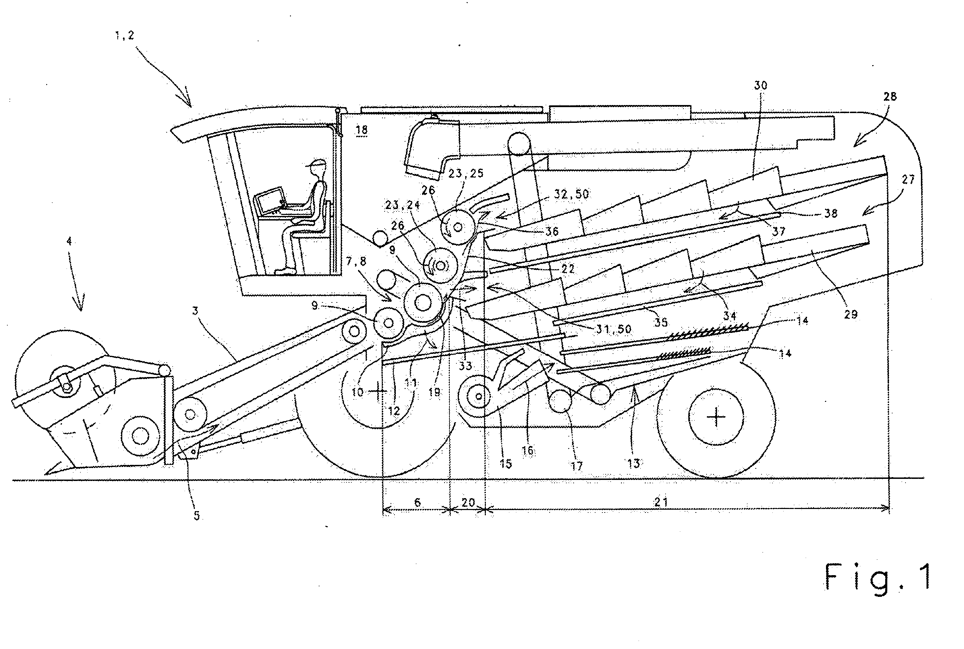

In Fig. 1 ist eine als Mähdrescher 2 ausgeführte landwirtschaftliche Erntemaschine 1 dargestellt deren frontseitig angeordneter Schrägförderer 3 das von einem beliebig ausgeführten Vorsatzgerät 4 abgeerntete und zu einem Erntegutstrang 5 zusammengeführte Erntegut in seinem rückwärtigen Bereich an die im Dreschbereich 6 liegenden Dreschorgane 7 bildendes Dreschwerk 8 übergibt. Dabei wird der Erntegutstrang 5 in an sich bekannter Weise zwischen einer oder mehreren umlaufenden Dreschtrommeln 9 und einer diese zumindest teilweise umschlingenden aus Dresch- und Abscheidekörben gebildeten Abscheideebene 10 hindurchgefördert. Während dieses Fördervorgangs werden die Früchte aus den Fruchtständen herausgelöst und zu einem wesentlichen Teil im Bereich der Abscheideebene 10 zusammen mit Kurzstroh und Spreu als ein erster Erntegutstrom 11 abgeschieden und einem dieser Abscheideebene 10 untenseitig zugeordneten Vorbereitungsboden 12 zugeführt. Ober den Vorbereitungsboden 12 gelangt dieser erste Erntegutstrom 11 schließlich in eine Reiftigungseinrichtung 13, die mittels oszillierend angetriebener Siebe 14 und durch Gebläse 15 erzeugte Luftströmungen 16 eine Trennung der sogenannten Nichtkornbestandteile von den Früchten, bei der Ernte von Getreide wären das die Körner, realisiert. Während die Nichtkornbestandteile aufgrund der Luftströmung 16 aus der Erntemaschine 1 herausgeblasen werden, werden die gereinigten Körner im einfachsten Fall mittels Förderschnecken 17 aus der Reinigungseinrichtung 13 in an sich bekannter Weise zum Beispiel in eine als Korntank 18 ausgeführte Speichereinrichtung abgefördert

Ein weiterer Erntegutstrom 19 tritt im rückwärtigen Bereich der Dreschorgane 7 aus dem Dreschbereich 6 aus und gelangt in den Übergabebereich 20 zwischen dem Dreschbereich 6 und dem Trennbereich 21. In erfindungsgemäßer Weise wird der Dreschbereich 6 gegenüber dem Trennbereich 21 durch ein noch näher zu beschreibendes Gutleitelement 22 abgegrenzt Dreschbereichsseitig sind dem Gutleitelement 22 im dargestellten Ausführungsbeispiel in vertikaler Richtung aufeinanderfolgend zwei Gutförderorgane 23 zugeordnet, die jeweils gemäß den angegebenen Pfeilrichtungen 26 als umlaufend angetriebene Gutfördertrommeln 24, 25 ausgebildet sind zugeordnet Der Trennbereich 21 des Mähdreschers 2 wird im dargestellten Ausführungsbeispiel durch zwei Trennebenen 27, 28 gebildet, wobei jeder Trennebene 27, 28 ein an sich bekannter Hordenschüttler 29, 30 zugeordnet ist, Es liegt im Rahmen der Erfindung, dass die Hordenschüttler 29, 30 auch durch sogenannte an sich bekannte und deshalb nicht dargestellte Trennrotoren ersetzt sein können, Zur Veranschaulichung der Erfindung wird an Hand der Figur 1 zunächst nur der Gutfluss des aus dem rückwärtigen Bereich der Dreschorgane 7 austretenden Erntegutstromes 19 durch den Mähdrescher 2 beschrieben. Das Gutleitelement 22 umfasst im dargestellten Ausführungsbeispiel zwei Gutdurchtrittsbereiche 50, die von einer unteren Gutdurchtnttsöffnung 31 sowie einer oberen Gutdurchtrittsöffnung 32 gebildet werden. Der mit hoher kinetischer Energie aus dem Dreschbereich 6 austretende Erntegutstrom 19 trifft zunächst auf die unmittelbar den Dreschorganen 7 nachgeordnete Gutfördertrommel 24, wobei im Auftreffbereich des Erntegutstromes 19 zumindest ein erster Erntegutteilstrom 33 aus dem Erntegutstrom 19 abgetrennt und über die im Bereich der ersten Gutfördertrommel 24 angeordnete Gutdurchtrittsöffnung 31 der unteren Trennebene 27 zugeführt wird. Während der Bewegung dieses Erntegutteilstromes 33 auf dem dieser Trennebene 27 zugeordneten Hordenschüttler 29 wird ein weiterer Erntegutstrom 34 im untenseitigen Bereich dieses Hordenschüttlers 29 abgeschieden, der im Wesentlichen ebenfalls aus Körnern, Kurzstroh und Spreu besteht. Über einen unterhalb dieses Hordenschüttlers 29 angeordneten geneigten Rücklaufboden 35 gelangt dieser Erntegutstrom 34 ebenfalls in die Reinigungseinrichtung 13, wobei, wie bereits beschrieben, die Körner von den Nichtkornbestandteilen getrennt werden.

Nachdem der aus dem Dreschbereich 6 austretende Erntegutstrom 19 die untere Gutfördertrommel 24 passiert hat gelangt der vergebene, nicht abgeschiedene Erntegutteilstrom 36 in den Wirkbereich der weiteren Gutfördertrommel 25, die diesen Erntegutteilstrom 36 so umlenkt, dass er in die der unteren Trennebene 27 in Richtung des Erntegutflusses nachgeordnete Trennebene 28 gelangt. Gemäß vorherigen Ausführungen umfasst diese Trennebene 28 ebenfalls einen Hordenschüttler 30, sodass in analoger Weise ein ebenfalls aus Körnern, Kurzstroh und Spreu bestehender Erntegutstrom 37 an diesem Hordenschüttler 30 abgeschieden und über einen weiteren Rücklaufboden 38 in noch näher zu beschreibender Weise der Reinigungseinrichtung 13 zugeführt wird.

Im rückwärtigen Bereich des Mähdreschers 2 werden die nicht verwertbaren Anteile der verschiedenen, über die Hordenschüttler 29, 30 bewegten Erntegutteilströme 33, 36 aus dem Mähdrescher 2 herausgefordert, wobei diese Erntegutteiiströme 33, 36 dann im Wesentlichen aus Nichtkornbestandteilen wie Stroh und Spreu bestehen. In nicht dargestellter Weise können die verschiedenen Erntegutteilströme 33, 36 jeder Trennebenen 27, 28 einer getrennten Verwertung zugeführt werden. Denkbar wäre hier beispielsweise die getrennte Aufnahme der Erntegutteilströme 33, 36 durch eine Ballenpresse.

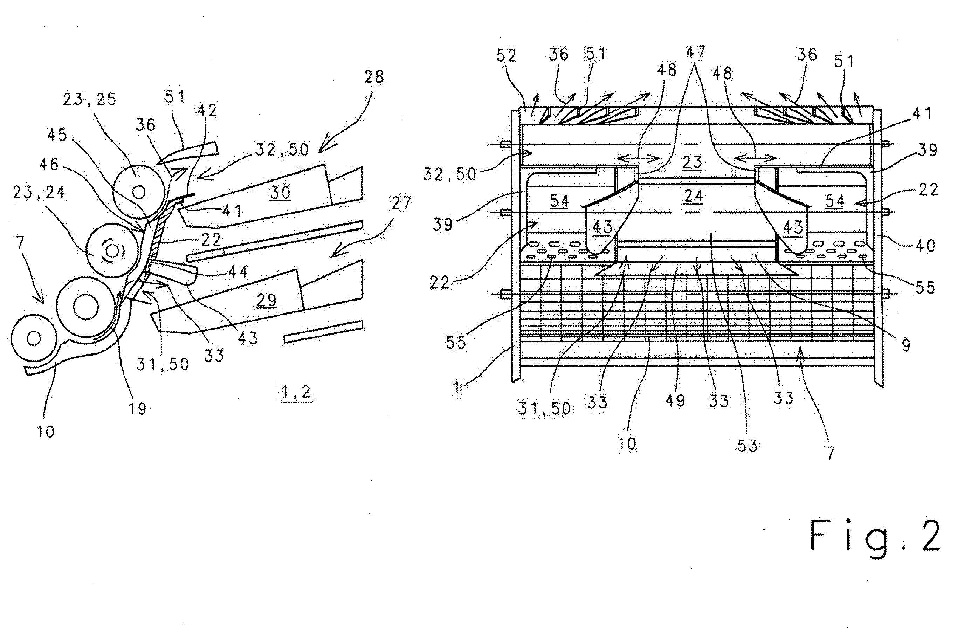

Figur 2 zeigt eine Detailansicht des dem Mähdrescher 2 zugeordneten erfindungsgemäßen Gutleitelementes 22 in einer Seiten- und Rückansicht. Das Gutleitelement 22 ist als dünnwandiges, konturiertes Blech ausgeführt, welches an seinem dem Dreschbereich 6 zugeordneten untenseitigen Ende mit dem rückwärtigen Bereich der Abscheideebene 10 verschraubt ist. Zudem stützt sich das Gutleitelemente 22 im dargestellten Ausführungsbeispiel über eine Vielzahl von Fixierwinkeln 39 am Maschinenrahmen 40 des Mähdreschers 2 ab und erstreckt sich zudem über die gesamte Arbeitsbreite der Dreschorgane 7. Obenseitig läuft das Gutleitelement 22 in einem abgewinkelten, in Richtung der obersten Trennebene 28 weisenden Führungssteg 41 aus. Der Führungssteg 41 kann einerseits so weit verlängert sein, dass er die untere und die obere Trennebene 27, 28 gegeneinander kinetische Energie aufweist müssen die den Trennebenen 27, 28 zugeordneten Gutförderorgane 23 den Erntegutstrom 19 und die aus ihm gebildeten Erntegutteilströme 33. 36 nicht zwingend beschleunigen sondern nur in Richtung der Trennebenen 27, 28 umgelenken, Aus diesem Grund kann die in Gutflussrichtung vorgeordnete, untere Gutfördertrommel 24 einen Trommelmantel 53 aufweisen, der in etwa der Breite der zugeordneten Gutdurchtrittsöffnung 31 entspricht.

Oberhalb des dem Gutleitelement 22 obenseitig angeformten Führungssteg 41 und dem diesen gegebenenfalls zugeordneten Führungsrechen 42 ergibt sich der weitere Gutdurchtrittsbereich 50. Dessen Gutdurchtrittsöffnung 32 wird untenseitig, wie bereits beschrieben, von dem Führungssteg 41 und dem Führungsrechen 42 begrenzt. Obenseitig ist dieser Gutdurchtrittsbereich 50 von einer Leitschienen 51 aufweisenden VerteHerhaube 52 begrenzt, sodass die diese Gutdurchtrittsöffnung 32 passierenden Erntegutteilströme 36 gleichmäßig über die Breite dieser Trennebene 28 verteilbar sind. Die Leitschienen 51 sind dabei in einer bevorzugten Ausführungsform einstellbar, sodass der Querverteilungseffekt auch in Abhängigkeit von den Ernteguteigenschaften änderbar ist. Der in diesem oberen Gutdurchtrittsbereich 50 geförderte Erntegutteilstrorn 36 setzt sich aus einem rechtsseitigen und einem linksseitigen Erntegutteilstrom 36 zusammen, Diese Struktur ergibt sich dadurch, dass diese Erntegutteilströme 36 im Bereich der unteren Gutdurchtrittsöffnung 31 entstehen. Dies erfolgt in der Weise, dass die untere Gutfördertrommel 24 einen Ertitegutteilstrom 33 aus dem ursprünglichen Erntegutstrom 19 abführt und die verbleibenden Teile, die weiteren Erntegutteilströme 36, entlang der verschlossenen Abschnitte 54 des erfindungsgemäßen Gutleitelementes 22 in den nachgeordneten Gutdurchtrittsbereich 50 gefördert werden. Da diese Erntegutteilströme 36 nun in der zugehörigen Trennebene 28 aus den Randbereichen dieser Trennebene 28 in die Mitte verlagert werden müssen, weisen die Leitschienen 51 eine zur Mitte dieser Trennebene 28 gerichtete Orientierung auf.

Indem das erfindungsgemäße Gutleitelement 22 zudem so den Außenkonturen der Dreschorgane 7 und der Gutförderorgane 23 folgt dass sich eine in vertikaler Richtung geneigte Lage des Gutteitelementes 22 ergibt, wird zudem sichergestellt, dass das Erntegut ohne energieintensive Gutumlenkvorgänge entlang des abgrenzt. Es ist aber auch denkbar, dass für die Abgrenzung der Trennebenen 27, 28 zueinander dem Führungssteg 41 beispielsweise ein Führungsrechen 42 lösbar zugeordnet ist.

Die dem Gutleitelement 22 zugeordnete wenigstens eine erste Gutdurchtnttsöffnung 31 erstreckt sich nur über einen Teilbereich der Breite des Gutleitelementes 22. In vertikaler Richtung ist die Höhe der Gutdurchtrittsöffnung 31 so gewählt, dass die den Dreschorganen 7 unmittelbar nachgeordnete Gutfördertrommel 24 zumindest einen Erntegutteitstrom 33 aus dem wenigstens teilweise auf sie treffenden Erntegutstrom 19 ableiten und der unteren Trennebene 27 zuführen kann. Dabei wird die Bewegungsrichtung des abgeleiteten Erntegutteilstroms 33 durch Verteilerklappen 43 in der Weise gesteuert, dass der Erntegutteilstrom 33 nach dem Passieren der Gutdurchtrittsöffnung 31 auf die Breite des nachgeordneten Hordenschüttlers 29 auseinandergezogen wird. Es liegt im Rahmen der Erfindung, dass die beidseitig der Gutdurchtrittsöffnung 31 zugeordneten Verteilerklappen 43 mittels nicht näher dargestellter Verstellmittel um vertikale Schwenkachsen 44 quer zur Bewegungsrichtung des Erntegutteilstromes 33 verstellbar sind, sodass beispielsweise in Abhängigkeit von den Ernteguteigenschaften die Querverteilung des Erntegutteilstromes 33 in der zugehörigen Trennebene 27 geändert werden kann. Zur Verbesserung des Gutflusses im Bereich dieser ersten Gutdurchtrittsöffnung 31 können der Gutdurchtnitsöffnung 31 in ihren den Gutförderorganen 23 zugeordneten Bereichen Begrenzungsstege 45 zugeordnet sein, denen zur besseren Trennung des Emtegutstromes 19 in Erntegutte!!ströme 33, 36 Schneidkanten 46 angeformt sein können. Zudem kann die untere, in Gutflussrichtung vorgeordnete Gutdurchtrittsöffnung 31 gemäß Pfeilrichtung 48 verschiebbare seitliche Begrenzungen 47 aufweisen, sodass der Durchgangsquerschnitt und damit die Mengenanteile der Erntegutteilströme 33, 36 am ursprünglichen Erntegutstrom 19 veränderbar sind. Zur sicheren Führung des unteren Erntegutteilstromes 31 kann die Gutdurchtrittsöffnung 31 untenseitig zudem ein Führungsblech 49 aufweisen, welches die Förderung des betreffenden Erntegutteilstromes 33 auf den ihr zugeordneten Hordenschüttler 29 unterstützt. Es liegt im Rahmen der Erfindung, dass dem Gutleitelemente 22 eine Vielzahl derartiger Gutdurchtrittsöffnungen 31 und zugehörige Gutförderorgane 23 zugeordnet sein können. Da der aus dem Dreschbereich 6 austretende Erntegutstrom 19 eine hohe Gutleitelementes 22 gefördert werden kann. Zur Vereinfachung der Montage des Gutleitelementes 22 kann es zudem von Vorteil sein, wenn das Gutleitelement 22 mehrteilig ausgeführt ist. Da unter anderem durch Reibvorgänge die Fördergeschwindigkeit der Erntegutteilströme 33, 36 entlang des Gutleitelementes 22 abnehmen kann werden die Gutförderorgane 23 in einer vorteilhaften Ausgestaltung mit unterschiedlichen Drehzahlen betrieben. Dabei ist die Drehzahl des Gutförderorgans 23 um so höher je später es mit den Erntegutteilströmen 33, 36 in Kontakt kommt. Bei einer Ausführung mit zwei aufeinanderfolgend angeordneten Gutfördertrommeln 24, 25 wird dann ein optimaler Gutfluss erreicht, wenn die nachgeordnete Gutfördertrommel 25 eine etwa 15 % höhere Drehzahl als die ihr vorgeordnete Gutfördertrommel 24 aufweist.

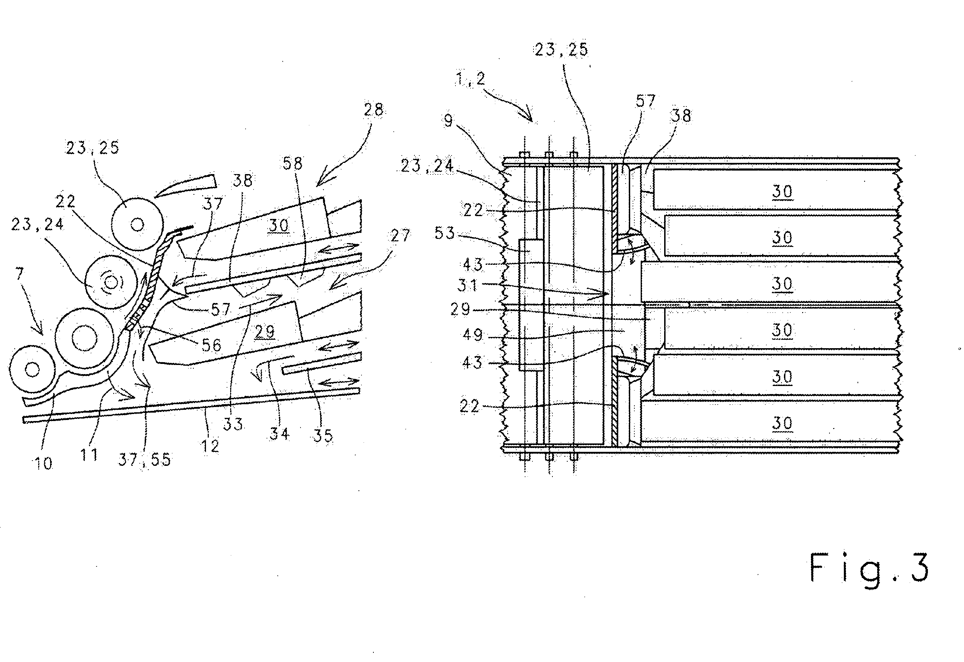

Um die Abscheideleistung eines mehrere Trennebenen 27, 28 aufweisenden Mähdreschers 2 weiter zu erhöhen, können die verschlossenen Abschnitte 54 des Gutleitelementes 22 auch von Korndurchtrittsöffnungen 55 durchsetzt sein, sodass in diesen Bereichen, gemäß Figur 3, ebenfalls eine Abscheidung von Körnern 56 aus den diese Abschnitte 54 durchlaufenden Erntegutteilströmen 36 erfolgen kann. Ein im einfachsten Fall trichterförmiges Körnerauffang- und Fördersystem 57 kann dann die verschiedenen körnerhaltigen Erntegutströme 56, 37 zusammenführen und an den bereits beschriebenen Vorbereitungsboden 12 übergeben, wobei diese Körnerauffang- und Fördersysteme 57 durch die jeweils noch gutstromfreien Bereiche der vorgeordneten Trennebene 27 geführt werden. Zudem können dem Rücklaufboden 38 des oberen Hordenschüttlers 30 Gutauflockerungselemente 58 zugeordnet sein, die in Abhängigkeit von der Bewegung des Rücklaufbodens 38 in den auf der darunter liegenden Trennebene 27 geförderten Erntegutteilstrom 33 eingreifen und diesen auflockern.

### Bezugszeichenliste

- 1: Erntemaschine
- 2: Mähdrescher
- 3: Schrägförderer
- 4: Vorsatzgerät
- 5: Erntegutstrang
- 6: Dreschbereich
- 7: Dreschorgan
- 8: Dreschwerk
- 9: Dreschtrommel
- 10: Abscheideebene
- 11: Erntegutstrom
- 12: Vorbereitungsboden
- 13: Reinigungseinrichtung
- 14: Sieb
- 15: Gebläse
- 16: Luftströmung
- 17: Förderschnecke
- 18: Korntank
- 19: Erntegutstrom
- 20: Übergabebereich
- 21: Trennbereich
- 22: Gutleitelement
- 23: Gutförderorgan
- 24: Gutfördertrommel
- 25: Gutfördertrommel
- 26: Pfeilrichtung
- 27: Trennebene
- 28: Trennebene
- 29: Hordenschüttler
- 30: Hordenschüttler
- 31: Gutdurchtrittsöffnung
- 32: Gutdurchtrittsöffnung
- 33: Erntegurteilstrom
- 34: Erntegutstrom
- 35: Rücklaufboden
- 36: Erntegutteilstrom
- 37: Erntegutstrom
- 38: Rücklaufboden
- 39: Fixierwinkel
- 40: Maschinenrahmen
- 41: Führungssteg
- 42: Führungsrechen
- 43: Verteilerklappe
- 44: Schwenkachse
- 45: Begrenzungssteg
- 46: Schneidkante
- 47: seitliche Begrenzung
- 48: Pfeilrichtung
- 49: Führungsblech
- 50: Gutdurchtrittsbereich
- 51: Leitschiene
- 52: Verteilerhaube
- 53: Trommelmantel
- 54: verschlossener Abschnitt
- 55: Korndurchtrittsöffnung
- 56: Körnerstrom
- 57: Körnerauffang- und Fördersystem
- 58: Gutauflockerungselement

## Patentansprüche

1. Mähdrescher zumindest einen Dreschbereich und einen Trennbereich umfassend, wobei der Dreschbereich beliebig gestaltete Dreschorgane aufweist und der Erntegutstrom den Dreschbereich in einem von den Dreschorganen und einer diese wenigstens teilweise ummantelnden Abscheideebene gebildeten Durchtrittsspalt durchläuft und im rückwärtigen Bereich der Dreschorgane an den von zumindest zwei Trennebenen gebildeten Trennbereich übergeben wird und der Erntegutstrom (19) vom Dreschbereich (6) in den Trennbereich (21) entlang eines Gutleitelementes (22) geführt wird und dem Gutleitelement (22) im Bereich der jeweiligen Trennebene (27, 28) Gutdurchtrittsbereiche (50) zugeordnet sind,
**dadurch gekennzeichnet,**
**dass** in dem jeweiligen Gutdurchtrittsbereich (50) zumindest ein umlaufend angetriebenes Gutförderorgan (23) angeordnet ist.

2. Mähdrescher zumindest einen Dreschbereich und einen Trennbereich umfassend, nach Anspruch 1,
**dadurch gekennzeichnet,**
**dass** das Gutleitelement (22) die Förderstrecke des Erntegutstromes (19) von der die Dreschorgane (7) wenigstens teilweise ummantelnden Abscheideebene (10) bis in den Bereich der am weitesten von dem Dreschbereich (6) entfernten Trennebene (28) überbrückt.

3. Mähdrescher zumindest einen Dreschbereich und einen Trennbereich umfassend, nach einem der vorhergehenden Ansprüche,
**dadurch gekennzeichnet,**
**dass** wenigstens den Gutdurchtrittsbereichen (50) des Gutleitelementes (22) ein umlaufend angetriebenes Gutförderorgan (23) zugeordnete ist.

4. Mähdrescher zumindest einen Dreschbereich und einen Trennbereich umfassend, nach einem der vorhergehenden Ansprüche,
**dadurch gekennzeichnet,**
**dass** der Gutdurchtrittsbereich (50) von einer Gutdurthtrittsöffnung (31) gebildet wird und wobei sich die Gutdurchtrittsöffnung (31) über einen Teilbereich der Arbeitsbreite des dem jeweiligen Gutdurchtrittsbereich (50) zugeordneten Gutförderorgans (23) erstreckt.

5. Mähdrescher zumindest einen Dreschbereich und einen Trennbereich umfassend, nach einem der vorhergehenden Ansprüche,
**dadurch gekennzeichnet,**
**dass** die Breite der Gutdurchtrittsöffnung (31) so gewählt ist, dass der Erntegutstrom (19) in nahezu gleiche Anteile von Erntegutteilströmen (33, 36) für die einzelnen Trennebenen (27, 28) aufgegliedert wird.

6. Mähdrescher zumindest einen Dreschbereich und einen Trennbereich umfassend, nach Anspruch 5,
**dadurch gekennzeichnet,**
**dass** die Breite der Gutdurchtrittsöffnung (31) einstellbar ist.

7. Mähdrescher zumindest einen Dreschbereich und einen Trennbereich umfassend, nach einem der vorhergehenden Ansprüche,
**dadurch gekennzeichnet,**
**dass** die eine oder mehreren Gutdurchtrittsöffnungen (31) in ihrem den Gutförderorganen (23) zugewandten Bereich und in Bewegungsrichtung des Erntegutstromes (19, 36) Begrenzungsstege (45) aufweisen.

8. Mähdrescher zumindest einen Dreschbereich und einen Trennbereich umfassend, nach Anspruch 7,
**dadurch gekennzeichnet,**
**dass** die Begrenzungsstege (45) als Schneidelemente (46) ausgebildet sind.

9. Mähdrescher zumindest einen Dreschbereich und einen Trennbereich umfassend, nach einem der vorhergehenden Ansprüche,
**dadurch gekennzeichnet,**
**dass** der Gutdurchtrittsöffnung (31) in Bewegungsrichtung des durchtretenden Erntegutteilstromes (33) Verteilerklappen (43) zur Querverteilung des Erntegutteilstromes (33) in der jeweiligen Trennebene (27) zugeordnet sind.

10. Mähdrescher zumindest einen Dreschbereich und einen Trennbereich umfassend, nach Anspruch 9,
**dadurch gekennzeichnet,**
**dass** die Position der Verteiterklappen (43) einstellbar ist.

11. Mähdrescher zumindest einen Dreschbereich und einen Trennbereich umfassend, nach einem der vorhergehenden Ansprüche,
**dadurch gekennzeichnet,**
**dass** die Gutförderorgane (23) als Gutfördertrommeln (24) ausgebildet sind und die Breite des Trommelmantels (53) der Gutfördertrommel (24) an die Breite der jeweiligen Gutdurchtrittsöffnung (31) angepasst ist.

12. Mähdrescher zumindest einen Dreschbereich und einen Trennbereich umfassend, nach einem der vorhergehenden Ansprüche,
**dadurch gekennzeichnet,**
**dass** der Erntegutstrom (19) und/oder die Erntegutteilströme (33, 36) in den nicht von den Gutdurchtrittsöffnungen (31) durchsetzten Bereichen ungehindert zwischen den Gutförderorganen (23) und dem Gutleitelement (22) durchtreten können

13. Mähdrescher zumindest einen Dreschbereich und einen Trennbereich umfassend, nach einem der vorhergehenden Ansprüche,
**dadurch gekennzeichnet,**
**dass** dem Gutleitelement (22) in seinem Endbereich ein Gutförderorgan (23, 25) in der Weise zugeordnet ist, dass das Gutförderorgan (25) in diesem Bereich den oder die Erntegutteilströme (36) in den Bereich der zugeordneten Trennebene (28) umlenkt.

14. Mähdrescher zumindest einen Dreschbereich und einen Trennbereich umfassend, nach Anspruch 13,
**dadurch gekennzeichnet,**
**dass** in Bewegungsrichtung der Erntegutteilströme (36) dem Gutförderorgan (23, 25) zumindest eine Verteilerhaube (52) mit einstellbaren Leitschienen (51) zur Querverteilung der Erntegutteilströme (36) zugeordnet ist.

15. Mähdrescher zumindest einen Dreschbereich und einen Trennbereich umfassend, nach einem der vorhergehenden Ansprüche,
**dadurch gekennzeichnet,**
**dass** das Gutleitelement (22) dem Dreschbereich (6) in einer in vertikaler Richtung geneigten Position zugeordnet ist und den Erntegutstrom (19, 33, 36) zwischen zwei in vertikaler Richtung aufeinanderfolgend angeordneten Gutfördertrommeln (24, 25) und zwei in vertikaler Richtung aufeinander folgend angeordneten Trennebenen (27, 28) führt.

16. Mähdrescher zumindest einen Dreschbereich und einen Trennbereich umfassend, nach einem der vorhergehenden Ansprüche,
**dadurch gekennzeichnet,**
**dass** die Trennebenen (27, 28) als Hordenschüttler (29, 30) oder Trennrotor ausgebildet sind.

17. Mähdrescher zumindest einen Dreschbereich und einen Trennbereich umfassend, nach einem der vorhergehenden Ansprüche,
**dadurch gekennzeichnet,**
**dass** die Drehzahl der Gutfördertrommeln (24, 25) in Richtung des Erntegutflusses zunimmt.

18. Mähdrescher zumindest einen Dreschbereich und einen Trennbereich umfassend, nach einem der vorhergehenden Ansprüche,
**dadurch gekennzeichnet,**
**dass** bei Anordnung von zwei Gutfördertrommeln (24, 25) die in Gutflussrichtung nachgeordnete Gutfördertrommel (25) eine etwa 15% höhere Drehzahl als die ihr vorgeordnete Gutfördertrommel (24) aufweist.

19. Mähdrescher zumindest einen Dreschbereich und einen Trennbereich umfassend, nach einem der vorhergehenden Ansprüche,
**dadurch gekennzeichnet,**
**dass** die verschlossenen Abschnitte (54) des Gutleitelementes (22) wenigstens teilweise von Korndurchtrittsöffnungen (55) durchsetzt sind.

20. Mähdrescher zumindest einen Dreschbereich und einen Trennbereich umfassend, nach einem der vorhergehenden Ansprüche,
**dadurch gekennzeichnet,**
**dass** die in der nachgeordneten Trennebene (28) abgeschiedenen Erntegutströme (37) jeweils im Bereich der verschlossenen Abschnitte (54) des Gutleitelementes (22) durch die vorgeordnete Trennebene (27) gefördert und nachfolgenden Arbeitsorganen (12, 13) zugeführt werden.

21. Mähdrescher zumindest einen Dreschbereich und einen Trennbereich umfassend, nach einem der vorhergehenden Ansprüche,
**dadurch gekennzeichnet,**
**dass** jedem Hordenschüttler (29, 30) ein Rücklaufboden (35, 38) zugeordnet ist und der Rücklaufboden (38) der jeweils nachgeordneten Trennebene (28) im Bereich der ihm vorgeordneten Trennebene (27) entsprechend den verschlossenen Abschnitten (54) des Gutleitelementes (22) in dieser Trennebene (27) geteilt ausgeführt ist.

22. Mähdrescher zumindest einen Dreschbereich und einen Trennbereich umfassend, nach einem der vorhergehenden Ansprüche,
**dadurch gekennzeichnet**
**dass** jeweils dem Rücklaufboden (38) eines Hordenschüttlers (30) einer nachgeordneten Trennebene (28) Gutauflockerungselemente (58) für die Erntegutteilströme (33) der vorgeordneten Trennebene (27) untenseitig zugeordnet sind.

23. Mähdrescher zumindest einen Dreschbereich und einen Trennbereich umfassend, nach einem der vorhergehenden Ansprüche,
**dadurch gekennzeichnet,**
**dass** das Gutleitelement (22) mehrteilig ausgebildet ist.

24. Mähdrescher zumindest einen Dreschbereich und einen Trennbereich umfassend, nach einem der vorhergehenden Ansprüche,
**dadurch gekennzeichnet,**
**dass** die Bewegung der die Trennebenen (27, 28) bildenden Hordenschüttler (29, 30) so aufeinander abgestimmt ist, dass sich eine zumindest teilweise Massenkräftekompensation einstellt.

25. Mähdrescher zumindest einen Dreschbereich und einen Trennbereich umfassend, nach einem der vorhergehenden Ansprüche,
**dadurch gekennzeichnet,**
**dass** die Erntegutteilströme (33, 36) der einzelnen Trennebenen (27, 28) einer gesonderten Verwertung zugeführt werden.

## Claims

1. A combine harvester including at least a threshing region and a separating region, wherein the threshing region has threshing members of any configuration and the flow of crop material passes through the threshing region in a passage gap formed by the threshing members and a separation plane which at least partially surrounds same and in the rearward region of the threshing members is transferred to the separating region formed by at least two separating planes and the flow of crop material (19) is guided from the threshing region (6) into the separating region (21) along a material guide element (22) and material passage regions (50) are associated with the material guide element (22) in the region of the respective separating plane (27, 28),
**characterised in that** at least one material conveying member (23) which is driven in rotation is arranged in the respective material passage region (50).

2. A combine harvester including at least a threshing region and a separating region according to claim 1 **characterised in that** the material guide element (22) bridges over the conveyor section of the flow of crop material (19) from the separation plane (10) which at least partially surrounds the threshing members (7) into the region of the separating plane (28) furthest away from the threshing region (6).

3. A combine harvester including at least a threshing region and a separating region according to one of the preceding claims **characterised in that** a material conveyor member (23) which is driven in rotation is associated at least with the material passage regions (50) of the material guide element (22).

4. A combine harvester including at least a threshing region and a separating region according to one of the preceding claims **characterised in that** the material passage region (50) is formed by a material passage opening (31) and wherein the material passage opening (31) extends over a portion of the working width of the material conveyor member (23) associated with the respective material passage region (50).

5. A combine harvester including at least a threshing region and a separating region according to one of the preceding claims **characterised in that** the width of the material passage opening (31) is so selected that the flow of crop material (19) is divided up into almost equal proportions of crop material partial flows (33, 36) for the individual separating planes (27, 28).

6. A combine harvester including at least a threshing region and a separating region according to claim 5 **characterised in that** the width of the material passage opening (31) is adjustable.

7. A combine harvester including at least a threshing region and a separating region according to one of the preceding claims **characterised in that** the one or more material passage openings (31) have boundary bars (45) in their region towards the material conveyor members (23) and in the direction of movement of the flow of crop material (19; 36).

8. A combine harvester including at least a threshing region and a separating region according to claim 7 **characterised in that** the boundary bars (45) are in the form of cutting elements (46).

9. A combine harvester including at least a threshing region and a separating region according to one of the preceding claims **characterised in that** associated with the material passage opening (31) in the direction of movement of the crop material partial flow (33) passing therethrough are distributor flaps (43) for transversely dividing the crop material partial flow (33) in the respective separating plane (27).

10. A combine harvester including at least a threshing region and a separating region according to claim 9 **characterised in that** the position of the distributor flaps (43) is adjustable.

11. A combine harvester including at least a threshing region and a separating region according to one of the preceding claims **characterised in that** the material conveyor members (23) are in the form of material conveyor drums (24) and the width of the drum casing (53) of the material conveyor drum (24) is adapted to the width of the respective material passage opening (31).

12. A combine harvester including at least a threshing region and a separating region according to one of the preceding claims **characterised in that** the flow of crop material (19) and/or the crop material partial flows (33, 36) can pass unimpeded in the regions through which the material passage openings (31) do not pass between the material conveyor members (23) and the material guide element (22).

13. A combine harvester including at least a threshing region and a separating region according to one of the preceding claims **characterised in that** a material conveyor member (23, 25) is associated with the material guide element (22) in the end region thereof in such a way that **in that** region the material conveyor member (25) deflects the crop material partial flow or flows (36) into the region of the associated separating plane (28).

14. A combine harvester including at least a threshing region and a separating region according to claim 13 **characterised in that** associated with the material conveyor member (23, 25) in the direction of movement of the crop material partial flows (36) is at least one distributor hood (52) with adjustable guide bars (51) for transversely dividing the crop material partial flows (36).

15. A combine harvester including at least a threshing region and a separating region according to one of the preceding claims **characterised in that** the material guide element (22) is associated with the threshing region (6) in a position inclined in a vertical direction and guides the flow of crop material (19, 33, 36) between two material conveyor drums (24, 25) arranged in succession in a vertical direction and two separating planes (27, 28) arranged in succession in a vertical direction.

16. A combine harvester including at least a threshing region and a separating region according to one of the preceding claims **characterised in that** the separating planes (27, 28) are in the form of straw walkers (29, 30) or separating rotors.

17. A combine harvester including at least a threshing region and a separating region according to one of the preceding claims **characterised in that** the rotary speed of the material conveyor drums (24) increases in the direction of the crop material flow.

18. A combine harvester including at least a threshing region and a separating region according to one of the preceding claims **characterised in that** with an arrangement of two material conveyor drums (24, 25) the material conveyor drum (25) which is downstream in the material flow direction has a rotary speed approximately 15% higher than the material conveyor drum (24) upstream thereof.

19. A combine harvester including at least a threshing region and a separating region according to one of the preceding claims **characterised in that** the closed portions (54) of the material guide element (22) have at least in part grain passage openings (55) extending therethrough.

20. A combine harvester including at least a threshing region and a separating region according to one of the preceding claims **characterised in that** the flows of crop material (37) which are separated in the downstream separating plane (28) are respectively conveyed in the region of the closed portions (54) of the material guide element (22) through the upstream separating plane (27) and fed to subsequent working members (12, 13).

21. A combine harvester including at least a threshing region and a separating region according to one of the preceding claims **characterised in that** a return tray (35, 38) is associated with each straw walker (29, 30) and the return tray (38) of the respectively downstream-disposed separating plane (28) is divided in the region of the separating plane (27) arranged upstream thereof in accordance with the closed portions (54) of the material guide element (22) in said separating plane (27).

22. A combine harvester including at least a threshing region and a separating region according to one of the preceding claims **characterised in that** material loosening elements (58) for the crop material partial flows (33) of the upstream separating plane (27) are associated at the underside with the respective return tray (38) of a straw walker (30) of a downstream separating plane (28).

23. A combine harvester including at least a threshing region and a separating region according to one of the preceding claims **characterised in that** the material guide element (22) is of a multi-part structure.

24. A combine harvester including at least a threshing region and a separating region according to one of the preceding claims **characterised in that** the movement of the straw walkers (29, 30) forming the separating planes (27, 28) is so matched to each other that an at least partial inertia force compensation effect occurs.

25. A combine harvester including at least a threshing region and a separating region according to one of the preceding claims **characterised in that** the crop material partial flows (33, 36) of the individual separating planes (27, 28) are fed to a separate utilisation.

## Revendications

1. Moissonneuse-batteuse comprenant au moins une zone de battage et une zone de séparation, dans laquelle la zone de battage présente des organes de battage de conformation quelconque et le courant de produit récolté traverse la zone de battage par une fente de passage formée par les organes de battage et un plan de triage enveloppant ceux-ci au moins en partie et est transmis dans la zone arrière des organes de battage à la zone de séparation formée d'au moins deux plans de séparation et le courant de produit récolté (19) est acheminé de la zone de battage (6) à la zone de séparation (21) le long d'un élément canalisateur de produit (22) et des zones de passage de produit (50) sont affectées à l'élément canalisateur de produit (22) dans la zone du plan de séparation respectif (27, 28),
**caractérisée en ce que,**
dans la zone respective de passage de produit (50) est agencé au moins un organe de transport de produit (23) entraîné en périphérie..

2. Moissonneuse-batteuse comprenant au moins une zone de battage et une zone de séparation selon la revendication 1,
**caractérisée en ce que**
l'élément canalisateur de produit (22) couvre le parcours de transport du courant de produit récolté (19) du plan de tri (10) enveloppant au moins en partie les organes de battage (7) jusque dans la zone du plan de séparation (28) le plus éloigné de la zone de battage (6).

3. Moissonneuse-batteuse comprenant au moins une zone de battage et une zone de séparation selon l'une quelconque des revendications précédentes,
**caractérisée en ce que**
un organe de transport de produit (23) entraîné sur la périphérie est affecté au moins aux zones de passage de produit (50) de l'élément canalisateur de produit (22).

4. Moissonneuse-batteuse comprenant au moins une zone de battage et une zone de séparation selon l'une quelconque des revendications précédentes,
**caractérisée en ce que**
la zone de passage de produit (50) est formée d'une ouverture de passage de produit (31) et dans laquelle l'ouverture de passage de produit (31) s'étend sur une zone partielle de la largeur de travail de l'organe de transport de produit (23) affecté à la zone respective de passage de produit (50).

5. Moissonneuse-batteuse comprenant au moins une zone de battage et une zone de séparation selon l'une quelconque des revendications précédentes,
**caractérisée en ce que**
la largeur de l'ouverture de passage de produit (31) est choisie de sorte que le courant de produit récolté (19) soit réparti en fractions presque identiques de courants partiels de produit récolté (33, 36) pour les plans de séparation individuels (27, 28).

6. Moissonneuse-batteuse comprenant au moins une zone de battage et une zone de séparation selon la revendication 5,
**caractérisée en ce que**
la largeur de l'ouverture de passage de produit (31) est ajustable.

7. Moissonneuse-batteuse comprenant au moins une zone de battage et une zone de séparation selon l'une quelconque des revendications précédentes,
**caractérisée en ce que**
la une ou plusieurs ouvertures de passage de produit (31) présente (nt) des nervures de délimitation (45) dans sa ou leur zone tournée vers les organes de transport de produit (23) et dans le sens de déplacement du courant de produit récolté (19, 36).

8. Moissonneuse-batteuse comprenant au moins une zone de battage et une zone de séparation selon la revendication 7,
**caractérisée en ce que**
les nervures de délimitation (45) se présentent sous la forme d'éléments de coupe (46).

9. Moissonneuse-batteuse comprenant au moins une zone de battage et une zone de séparation selon l'une quelconque des revendications précédentes,
**caractérisée en ce que**
des volets de distribution (43) sont affectés à l'ouverture de passage de produit (31) dans le sens de déplacement du courant partiel de produit récolté traversant (33) pour répartir transversalement le courant partiel de produit récolté (33) dans le plan de séparation respectif (27).

10. Moissonneuse-batteuse comprenant au moins une zone de battage et une zone de séparation selon la revendication 9,
**caractérisée en ce que**
la position des volets de distribution (43) est ajustable.

11. Moissonneuse-batteuse comprenant au moins une zone de battage et une zone de séparation selon l'une quelconque des revendications précédentes,
**caractérisée en ce que**
les organes de transport de produit (23) se présentent sous la forme de tambours de transport de produit (24) et la largeur de l'enveloppe (53) du tambour de transport de produit (24) est adaptée à la largeur de l'ouverture de passage de produit respective (31).

12. Moissonneuse-batteuse comprenant au moins une zone de battage et une zone de séparation selon l'une quelconque des revendications précédentes,
**caractérisée en ce que**
le courant de produit récolté (19) et/ou les courants partiels de produit récolté (33, 36) dans les zones non traversées par les ouvertures de passage de produit (31) peut ou peuvent passer sans entraves entre les organes de transport de produit (23) et l'élément canalisateur de produit (22).

13. Moissonneuse-batteuse comprenant au moins une zone de battage et une zone de séparation selon l'une quelconque des revendications précédentes,
**caractérisée en ce que**
un organe de transport de produit (23, 25) est affecté à l'élément canalisateur de produit (22) dans sa zone d'extrémité de manière que l'organe de transport de produit (25) de cette zone dévie le ou les courants partiels de produit récolté (36) dans la zone du plan de séparation affecté (28)..

14. Moissonneuse-batteuse comprenant au moins une zone de battage et une zone de séparation selon la revendication 13,
**caractérisée en ce que**
au moins une hotte de distribution (52) avec des rails de guidage ajustables (51) est affectée, dans le sens de déplacement des courants partiels de produit récolté (36), à l'organe de transport de produit (23, 25) pour répartir transversalement les courants partiels de produit récolté (36).

15. Moissonneuse-batteuse comprenant au moins une zone de battage et une zone de séparation selon l'une quelconque des revendications précédentes,
**caractérisée en ce que**
l'élément canalisateur de produit (22) est affecté à la zone de battage (6) dans une position inclinée en direction verticale et guide le courant de produit récolté (19, 33, 36) entre deux tambours de transport de produit (24, 25) successivement agencés en direction verticale et deux plans de séparation (27, 28) successivement agencés en direction verticale.

16. Moissonneuse-batteuse comprenant au moins une zone de battage et une zone de séparation selon l'une quelconque des revendications précédentes,
**caractérisée en ce que**
les plans de séparation (27, 28) se présentent sous la forme de secoueurs à claies (29, 30) ou de rotor de séparation.

17. Moissonneuse-batteuse comprenant au moins une zone de battage et une zone de séparation selon l'une quelconque des revendications précédentes,
**caractérisée en ce que**
la vitesse de rotation des tambours de transport de produit (24, 25) augmente en direction du courant de produit récolté.

18. Moissonneuse-batteuse comprenant au moins une zone de battage et une zone de séparation selon l'une quelconque des revendications précédentes,
**caractérisée en ce que**
en cas d'agencement de deux tambours de transport de produit (24, 25) le tambour de transport de produit (25) situé en aval dans le sens du courant de produit présente une vitesse de rotation à peu près 15 % supérieure à celle du tambour de transport de produit (24) situé en amont.

19. Moissonneuse-batteuse comprenant au moins une zone de battage et une zone de séparation selon l'une quelconque des revendications précédentes,
**caractérisée en ce que**
les sections fermées (54) de l'élément canalisateur de produit (22) sont traversées au moins en partie par des ouvertures de passage de grain (55).

20. Moissonneuse-batteuse comprenant au moins une zone de battage et une zone de séparation selon l'une quelconque des revendications précédentes,
**caractérisée en ce que**
les courants de produit récolté (37) triés dans le plan de séparation (28) situé en aval sont transportés respectivement dans la zone des sections fermées (54) de l'élément canalisateur de produit (22) à travers le plan de séparation amont (27) et sont acheminés à des organes de travail suivants (12, 13).

21. Moissonneuse-batteuse comprenant au moins une zone de battage et une zone de séparation selon l'une quelconque des revendications précédentes,
**caractérisée en ce que**
un plateau de reflux (35, 38) est affecté à chaque secoueur à claies (29, 30) et le plateau de reflux (38) du plan de séparation (28) situé respectivement en aval est séparé dans la zone du plan de séparation (27) situé en amont conformément aux sections fermées (54) de l'élément canalisateur de produit (22) dans ce plan de séparation (27).

22. Moissonneuse-batteuse comprenant au moins une zone de battage et une zone de séparation selon l'une quelconque des revendications précédentes,
**caractérisée en ce que**
des éléments d'ameublissement de produit (58) sont respectivement affectés, sur le côté inférieur, au plateau de reflux (38) d'un secoueur à claies (30) d'un plan de séparation (28) situé en aval pour les courants partiels de produit récolté (33) du plan de séparation (27) situé en amont.

23. Moissonneuse-batteuse comprenant au moins une zone de battage et une zone de séparation selon l'une quelconque des revendications précédentes,
**caractérisée en ce que**
l'élément canalisateur de produit (22) se présente en plusieurs parties.

24. Moissonneuse-batteuse comprenant au moins une zone de battage et une zone de séparation selon l'une quelconque des revendications précédentes,
**caractérisée en ce que**
les mouvements des secoueurs à claies (29, 30) formant les plans de séparation (27, 28) sont accordés les uns aux autres de sorte qu'une compensation des forces d'inertie au moins partielle s'instaure.

25. Moissonneuse-batteuse comprenant au moins une zone de battage et une zone de séparation selon l'une quelconque des revendications précédentes,
**caractérisée en ce que**
les courants partiels de produit récolté (33, 36) des plans de séparation individuels (27, 28) sont acheminés à une utilisation séparée.
